(19) Europäisches Patentamt
European Patent Office
Office européen des brevets

(11) Publication number: **0 106 327 A2**

(12) # EUROPEAN PATENT APPLICATION

(21) Application number: 83110237.1

(22) Date of filing: 13.10.83

(51) Int. Cl.³: B 01 D 15/08
B 01 J 20/22, C 22 B 11/04

(30) Priority: 14.10.82 US 434251

(43) Date of publication of application:
25.04.84 Bulletin 84/17

(84) Designated Contracting States:
AT BE CH DE FR GB IT LI NL SE

(71) Applicant: J.T. Baker Chemical Co.
222 Red School Lane
Phillipsburg, New Jersey 08865(US)

(72) Inventor: Crane, Laura Jane
70 W. Valley Brook Road
Long Valley New Jersey 07853(US)

(72) Inventor: Ganapathy, Ramachandran
40 Harwich Road
Phillipsburg New Jersey 08865(US)

(74) Representative: Vossius Vossius Tauchner Heunemann Rauh
Siebertstrasse 4 P.O. Box 86 07 67
D-8000 München 86(DE)

(54) **Selective separation of noble metals.**

(57) A novel method of selectively separating noble metals from solutions containing same utilizes solid supports bearing amine functions appropriately spaced and acidic pH conditions of from about pH 0.5 to about 2.5.

EP 0 106 327 A2

0106327

Richardson-Vicks Inc.
Our Ref: S 587 EP

## SELECTIVE SEPARATION OF NOBLE METALS

13. Okt. 1983

### Field of the Invention

This invention relates to a process for selectively separating noble metals from solutions containing such noble metals and more particularly to a process for selectively separating said noble metals from solutions containing such noble metals by utilizing solid supports bearing amine functions appropriately spaced and under acidic pH conditions of from about pH .5 to about 2.5.

### Background of the Invention

It has heretofore been recognized that various methods are available for separating metals from solutions. However, it is highly desirable that an extraction method be available whereby noble metals may be selectively extracted from solutions containing both noble metals and base and transition metals. Heretofore, in order to selectively separate noble metals from base and transition metals, it has been necessary to employ a chelating agent which contains functional groups capable of extended resonance, such as for example, as disclosed by Koster, G. and Schmuckler, G., Analytica Chemica Acta <u>38</u> 179-184 (1967). It has now been found that it is not necessary to employ a chelating agent which contains functional groups capable of extended resonance in order to selectively separate noble metals.

## Summary of the Invention

It has now been unexpectedly discovered that by utilizing solid support bearing amine functions appropriately spaced and under acidic pH conditions of from about pH 0.5 to 2.5 noble metals may be selectively separated from base and transition metals.

## Details of the Invention

It has surprisingly been found that noble metals may be selectively separated by utilizing solid supports bearing amine functional groups appropriately spaced when acidic pH conditions of from about pH 0.5 to about 2.5 are employed.

The solid supports suitable for use in the invention can be any suitable solid support such as silica, alumina, cross-linked resins such as polystyrene-divinylbenzene resins and the like. It is only necessary that the solid support be inert to the environment of the metal, i.e. that it be unreactive and/or insoluble, must not bind with metals non-specifically and must be capable of being properly derivatized with the appropriate amine bearing functionalities. Preferably the solid support is silica gel and most preferably column chromatography grade of about 40 micron size.

The amine functional groups are attached to the solid support and have the following formula:

$$\text{support}\left|\,-(O)_y-\overset{\left(\underset{|}{CH_3}\right)_p}{Si}-\left[(CH_2)_m-NH-(CH_2)_n-NH\right]_x-H\right.$$

 0106327

wherein m is a whole integer of from 1 to 6, n is a whole integer of from 2 to 5, x is a whole integer of from 1 to 10, y is a whole integer of 1 to 3 and p is equal to 3 minus y, that is, 0, 1 or 2. Most preferably m is 3, n is 2 and x is 1. Such a most preferred bonded solid support is formed by the reaction of N-2-aminoethyl-3-amino-propyl trimethoxysilane with silica gel according to procedures known in the art, such as for example, as disclosed by Leyden, D.E., et al., Analytical Letters, 8(1) 51-56(1975). Another preferred bonded solid support is that obtained by bonding trimethoxysilyl-N-propyl-N-polyethyleneimine having a molecular weight of about 500.

Such solid supports bearing amine functions appropriately spaced specifically bind or retain noble metals from acidic solutions of pH from about 0.5 to 2.5, preferably about pH 1, while not binding or retaining base metals or transition metals. Nobles metals - selectively bound by the process of this invention - are defined as ruthenium, rhodium, palladium, osmium, iridium, platinum, gold and the Group IIB and VIIB metals in their hexavalent state, namely hexavalent chromium, molybdenium, wolfram, manganese, technetium and rhenium. The first seven listed noble metals constitute a preferred group of noble metals for which the process of this invention is useful.

The noble metals can be selectively separated from either aqueous or organic solutions containing such noble metals. The process of this invention

may be employed to selectively separate noble metals that are present in trace levels, for example, from about $10^{-9}$ to $10^{-6}$ g/ml, as well as at macro levels, for example, from about $10^{-3}$ to $10^{-2}$ g/ml or even at higher levels. That is, the process is operable with either dilute or concentrated solutions.

The noble metals may be selectively separated from solution by either a batch process wherein the solution containing the noble metals is in excess or by a column technique where the solid support phase is in excess. It will also be appreciated that the process of this inention is operable whether the noble metal to be selectively separated is in complexed or ionic form.

The process of this invention has been found to be independent of the total volume of the solution containing the noble metals and there is no limiting factor except for the amount of bonded solid support employed. That is, the process is operable so long as the capacity of the solid support is not surpassed and therefore has a high capacity.

Moreover, the solid phase bearing the amine function appropriately spaced has such a high affinity for the noble metals at pH of from about 0.5 to 2.5 that the process may be employed in batch condition where the solution is in excess compared to the solid phase.

In the following Examples I to VII the solid support used is a bonded phase of silica gel (40 micron size, column chromatography grade) covalently bonded to N-2-aminoethyl-3-aminopropyl trimethoxysilane. In Example VIII the solid support is a bonded phase of silica gel covalently bonded to trimethoxysilyl-N-propyl-N-polyethyleneamine.

Example I

Over chromatography columns containing about 1 gram of bonded phase solid support were passed by vacuum aspiration of about 20 ml mercury, 50 ml each of a pH 1 aqueous solution of ions of the elements listed below. The elements were present in the aqueous solutions at concentrations of from 0.65 to 0.2 mg/ml.

The following noble elements were completely absorbed (>95 to 100%) by the diamine bonded phase solid support:

| | | |
|---|---|---|
| ruthenium | platinum | rhodium |
| palladium | gold | manganese (VI) |
| osmium | chromium (VI) | wolfram (VI) |
| iridium | molybdenium (VI) | rhenium (VI) |
| technetium (VI) | | |

The following base or transition elements were not retained by the diamine bonded phase solid support:

| | | |
|---|---|---|
| cadmium | cobalt | silver |
| cesium | nickel | mercury |
| barium | scandium | thallium |
| zinc | lead | arsenic |
| chromium (III) | beryllium | bismuth |
| manganese (II) | copper | selenium |
| iron | tellurium | |

BAD ORIGINAL

Example II

A pH 1 solution containing 1 mg/ml of carbonyl (bistriphenylphosphine) rhodium I chloride in benzene was passed over a column containing 1 gram of diamine bonded phase solid support by vacuum aspiration of about 20 ml mercury. The solution was continually passed through the column until breakthrough occurred. The amount retained by the solid phase in the column up to breakthrough is taken as the capacity of the column. A total of 75 mg of the rhodium complex was retained before rhodium appeared in the eluent.

Example III

A pH solution containing 1 mg/ml of bistriphenylphosphine palladium II chloride in benzene was passed over a column containing 1 gram of diamine bonded phase solid support by vacuum aspiration of about 20 ml mercury. The solution was continually passed through the column until breakthrough occurred. A total of 201 mg of the palladium complex was retained before breakthrough occurred.

Example IV

An aqueous pH 1 solution ocntaining 4 mg/ml of gold chloride was passed through a column as in Example II and 200 mg gold was retained before breakthrough occurred, that is, before gold appeared in the eluent. The gold was readily removed from the column by washing with a 3-5 fold stoichiometric excess of 2N $HNO_3$, 1N HCl using water aspiration.

Example V

A gold plating solution containing 200 ppm gold, 50 ppm copper, 10 ppm zinc, 10 ppm lead and 50 ppm nickel was adjusted to pH 1 with phosphoric acid and then passed over a column containing 100 mg of the diamine bonded phase solid support. 50 ml of the plating solution was passed over this column before gold was found in the eluent. The other metals were not retained. The gold was readily eluted using a 3-5 fold stoichiometric excess of 0.1N HCl.

Example VI

A gold plating solution containing 2000 ppm gold, 800 ppm cobalt, 50 ppm copper, 50 ppm nickel and 20 ppm iron was adjusted to pH 2.5 with phosphoric acid and then passed over a column containing 500 mg of the diamine bonded phase solid support. Breakthrough of the gold occurred at 25 ml. The only other metal retained at pH 2.5 was iron, which was subsequently selectively eluted off the column at ph 1. The gold was then eluted off with 3-5 fold stoichiometric excess 0.1N thiourea, 0.1N HCl.

Example VII

An 80:20 acetone:water solution of the ions of nickel, copper and gold at concentrations of 1 mg/ml was passed over a column containing 200 mg of the diamine bonded phase solid support. Only gold was retained, up to 12 mg before any gold appeared in the eluent. The gold was subsequently removed with 2N HCl/0.1N $HNO_3$.

BAD ORIGINA

Example VIII

Example VII was repeated except the column contained 200 mg of wide-pore, low surface area silica gel covalently bonded to trimethoxysilyl-N-propyl-N-polyethyleneimine. Only gold was retained, up to 8.4 mg before any gold appeared in the eluent. The gold was subsequently removed by 3-5 fold stoichiometric excess 0.1N thiourea, 0.1N HCl.

While the N-2-aminoethyl-3-aminopropyl trimethoxysilane bonded to silica has been disclosed in the literature to complex base metal ions and transition metal ions, such as for example, as disclosed in Leyden, D.E. et al., Analytical Letters 8(1) 51-56(1975), Burggraf, L.W. et al., Analytica Chemica Acta 129, 19-27 (1981), and Jenett H. et al., Presenius Z. Anal. Chem. 304, 362-368 (1980), it was totally surprising to find that such diamine bonded phase solid support binds very strongly to all of the noble metals. Even more surprising was that the binding can be made totally selective for noble metals to the exclusion of base and transition metals by appropriate adjustment of the pH to a range of from about pH 0.5 to 2.5.

The process of this invention finds many practical uses. Among the contemplated uses for the process of this invention those may be mentioned for example, recovering noble metals from industrial wastes, removing noble metals from plating solutions,

separation and concentration of noble metals, preconcentration of noble metals, separating noble metals from sea water, recovery of noble metals from metal refinery wastes and the like.

CLAIMS

1. A method of separating a noble metal from a solution containing said noble metals comprising bringing said solution at a pH withing the range of from about pH 0.5 to 2.5 into contact with a diamine bonded phase solid support of the formula

$$\text{support}\left|\; -(O)_y-\overset{(CH_3)_p}{\overset{|}{Si}}-\left[(CH_2)_m-NH-(CH_2)_n-NH\right]_x-H\right.$$

wherein m is a whole integer of from 1 to 6, n is a whole integer of from 2 to 5, x is a whole integer of from about 1 to 10, y is a whole integer of from 1 to 3 and p is an integer equal to 3 minus y, whereby the noble metal is retained on said solid support.

2. A method of selectively separating a noble metal from a solution containing both a noble metal and a base or transition metal comprising bringing said solution at a pH within the range of from about pH 0.5 to 2.5 into contact with a diamine bonded phase solid support of the formula

$$\text{support}\left|\; -(O)_y-\overset{(CH_3)_p}{\overset{|}{Si}}-\left[(CH_2)_m-NH-(CH_2)_n-NH\right]_x-H\right.$$

wherein m is a whole integer of from 1 to 6, n is a whole integer of from 2 to 5, x is a whole integer of from about 1 to 10, y is a whole integer of from 1 to 3 and p is an integer equal to 3 minus y, whereby the noble metal is selectively retained on said solid support.

3. The method of any of claims 1 and 2 wherein m is 3, n is 2 and x is 1.

4. The method of any of claims 1 and 2 wherein the noble metal is a metal selected from the group consisting of ruthenium, rhodium, palladium, osmium, iridium, platinum and gold.

5. The method of claim 3 wherein the noble metal is a metal selected from the group consisting of ruthenium, rhodium, palladium, osmium, iridium, platinum and gold.

6. The method of any of claims 1, 2, 3, 4 and 5 wherein the pH of the solution is about pH 1.

7. The method of claim 1 wherein the support is selected from the group consisting of silica, alumina and a cross-linked resin.

8. The method of claim 2 wherein the support is selected from the group consisting of silica, alumina and a cross-linked resin.

9. The method of claim 3 wherein the solid support is silica gel.

10. Use of the method according to any of claims 1 to 9 for recovering noble metals from industrial waste, removing noble metals from plating solutions, separating noble metals from sea water, or recovering noble metals from metal refinery wastes.